# EUROPEAN PATENT SPECIFICATION

(11) **EP 1 142 970 B1**
(45) Date of publication and mention of the grant of the patent: **30.06.2004**
(21) Application number: 01107761.7
(22) Date of filing: 03.04.2001
(51) Int. Cl.: C09D 11/10

(54) **Ink for applying a decoration on a molded article simultaneously with molding, and decorated film or sheet**
Tinte zum Auftragen einer Dekoration auf ein Formteil gleichzeitig mit dem Formen, und dekorierter Film oder Schicht
Encre pour appliquer une décoration sur un article moulé simultanément avec le moulage, et film ou feuille décorée

(30) Priority: 06.04.2000 JP 2000104558
(43) Date of publication of application: 10.10.2001
(73) Proprietor: TEIKOKU PRINTING INKS MFG. CO., LTD, Tokyo 108-0073 (JP)
(72) Inventor: Sekine, Yoshinori c/o Teikoku Printing Inks Co.Ltd, Tokyo 116-0011 (JP)
(74) Representative: VOSSIUS & PARTNER

(56) References cited:
- DE-A- 19 832 570
- US-A- 5 648 414
- PATENT ABSTRACTS OF JAPAN vol. 006, no. 242 (M-175), 30 November 1982 (1982-11-30) & JP 57 140188 A (RICOH KK), 30 August 1982 (1982-08-30)

## Description

The present invention relates generally to an ink used for applying a decoration on a molded article upon injection molding, and more particularly to a metal powder-containing ink.

For the decoration of the surface of a molded article of synthetic resin, there is known a method wherein the synthetic resin is injected into a mold cavity provided with a film or sheet having a decoration pre-printed thereon by an ink to integrate the pattern printed on the decorated sheet into the synthetic resin.

This method enables the pattern to be formed on a molded article configured such that difficulty is involved in forming a pattern directly on its surface by means of printing. The method have also additional advantages of having higher adhesion strength than could be achieved by printing on the surface of the molded article and being unlikely to deteriorate with the lapse of years, and so is used for the decorations of the surfaces of various devices inclusive of electronic devices of small size such as portable telephones, and personal computers.

In an injection molding process, the decorated sheet with a decoration already printed thereon is first placed in the mold, and a molding synthetic resin melt is then injected into the mold. Since the melt having a temperature of 200°C to 300°C is injected under high pressure into the mold, however, there are several problems such as a flow of the pattern printed on the decorated sheet, and deformation of the decorated sheet. These problems result in molded article products that are poor in quality or of no commercial value. In some case, the adhesion strength of the decorated sheet to the molded synthetic resin becomes insufficient due to the rolling of the decoration.

To solve such problems, it has been proposed to change the position of a gate of the mold used for injection molding or vary the spacing between the gate and the decorated film or sheet. However, these proposals are found to have another problem that the amount of material wastefully consumed during molding increases.

It has also been proposed to make use of an ink having the nature of extending following the deformation of the decorated film or sheet, which occurs while the synthetic resin melt flows. For this ink, a two-part type of printing ink for intermolecular crosslinking is used, and for a printing ink of high heat resistance, a printing ink containing a thermoplastic aromatic polycarbonate has already been proposed in Patent No. JP-B2-2997636 (EP - 0688 839 A).

However, even these printing inks are found to flow in severe injection molding conditions such as high injection speeds of synthetic resin melts.

This printing ink flow problem becomes noticeable in the case of a printing ink containing metal particles such as aluminum particles.

The metal particles such as aluminum particles are widely used for the purpose of adding a metallic luster and a high degree of concealing effect to molded articles, and so a grave problem arises in association with a decorated film or sheet with a decoration printed thereon by a printing ink containing metal particles such as aluminum particles.

An object of the present invention is to provide a printing ink containing metal particles, which can prevent any flow of a pattern printed on a decorated film or sheet that is placed in a mold for injection molding while it is integrated with synthetic resin, thereby foreclosing the possibility of yielding defectives on injection molding.

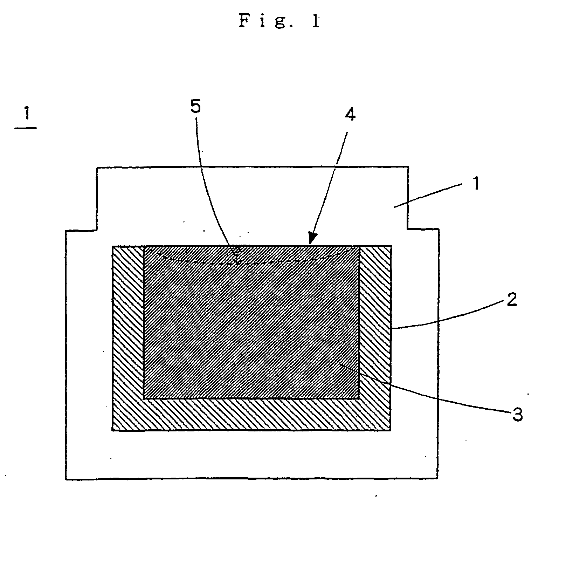

Fig. 1 is a plan representation of an injection molded sample prepared in the example according to the present invention.

According to the present invention, the aforesaid object is achievable by the provision of an ink used for printing of a preprinted film or sheet used for decorating a molded article by integration with a synthetic resin melt at a synthetic resin molding step, comprising:
a binder comprising a polycarbonate resin, and
a metal particle coated on the surface thereof with a coupling agent or a synthetic resin.

Preferably in this aspect of the present invention, 'the metal particle is a flat form of aluminum particle, which may have, or may have not, been coated on its surface with an acrylic resin.

The present invention also provides a printed film or sheet used for decorating a molded article by integration with a synthetic resin melt at a synthetic resin molding step, which has been obtained by printing a synthetic resin film with an ink comprising a binder comprising a polycarbonate resin and a metal particle coated on the surface thereof with a coupling agent or a synthetic resin.

Further, the present invention provides a synthetic resin injection molding method wherein a printed film or sheet is prepared by printing using an ink containing a metal particle coated on the surface thereof with a coupling agent or a synthetic resin, the printed film or sheet is then placed in a metal mold, and a synthetic resin melt is finally subjected to injection molding at a temperature of 200°C or higher.

According to the present invention, it has now been found that when injection molding is carried out while a sheet with a decoration printed thereon using a ink containing fine metal particles, e.g., a so-called silver ink, is placed in a mold, any flowing of the decorative image applied on the printed film or sheet is prevented by using metal particles coated on their surfaces with a coupling agent or a synthetic resin as the fine metal particles while the image is not adversely affected by a resin melt injected into the mold.

In consideration of the facts that the flowing of the decoration during injection molding does not only relate to the heat resistance of a binder contained in the ink but also depends largely on fine metal particles contained in the ink such as the silver ink, the inventors have found that problems such as a decoration flowing problem can be substantially solved by using metal particles treated on their surfaces with a synthetic resin.

For the fine metal particles to be added to inks, flat fine particles such as scaly ones are used for the purposes of achieving an enhanced concealing effect and obtaining a metallic luster. The present invention takes chief aim at preventing any flowing of the decoration by previously coating the surfaces of these fine metal particles with a coupling agent or a synthetic resin.

Although why any flowing of the decoration can be prevented by the method of the present invention has yet to be clarified, a possible explanation could be that in the metal surface coated with the coupling agent or synthetic resin, the affinity of the metal surface for the binder in the ink is so enhanced that the metal surface is less susceptible to influences by a flow of the synthetic resin melt injected during injection molding.

For the binder used with the picture applying ink according to the present invention, it is preferable to use polycarbonate resins of high heat resistance. For instance, it is acceptable to make use of generally known polycarbonate resins as well as aromatic polycarbonate resins modified by copolymers comprising 2,2-bis(4-hydroxyphenyl)propane units and 2,2-bis(4-hydroxy-3-methylphenyl)propane units or dialkylsiloxane units.

To be more specific, Yupiron FPC2136 (copoly(2,2-bis(4-hydroxyphenyl)propane/2,2-bis(4-hydroxy-3-methylphenyl) propane) 'carbonate made by Mitsubishi Gas Chemical Company, Inc.), Z200 made by the same company, Panlight TS-2020 made by Teijin Limited, and high-heat-resistant thermoplastic resins set forth in Patent No.JP-B2-2997636 (EP-688839 A) are usable.

For the aluminum particles coated with a synthetic resin or aluminum particles treated with a coupling agent, it is acceptable to use White Silver FZ-7160N, FZ-Q65, FZ-Q95 and 97-2515, all made by Toyo Aluminum Co., Ltd.

The ink of the present invention may be produced by mixing these components with pigments and components generally added to inks, and milling the resultant mixture with the addition of an organic solvent thereto.

As mentioned above; the ink of the present invention is produced by mixing the components together. Alternatively, the present ink may be produced by adding the metal particles treated with the synthetic resin or coupling agent to heat-resistant ink compositions commercially available for the formation of decorated sheets. For instance, it is acceptable to use NORIPHAN HTR (Proell Co., Ltd.) commercially available for the formation of decorated sheets.

The decorated film or sheet produced by use of the ink according to the present invention may be formed by printing a given pattern on a substrate film such as a polycarbonate film by means of suitable processes such as screen printing.

For the synthetic resin to be integrated with the decorated sheet of the present invention, it is acceptable to use polycarbonate resins, acrylonitrile·butadiene·styrene copolymers, and polymer alloys comprising polycarbonate resins/acrylonitrile·butadiene·styrene copolymers.

### EXAMPLE

The present invention is now explained with reference to some examples.

### Example 1A

### Preparation of Ink 1

Twenty (20) parts by weight of a polycarbonate resin (Yuprion FPC2136 made by Mitsubishi Gas Chemical Company, Inc.), 20 parts by weight of a paste of aluminum particles coated with a synthetic resin (FZ-7160N made by Toyo Aluminum Co., Ltd. with a particle diameter D₅₀ of 13 *µ*m), 1 part by weight of an anti-foaming agent (BYK-057 made by BYK-Chemie Japan Co., Ltd.), 20 parts by weight of a cyclohexanone solvent, 20 parts by weight of a propylene glycol monomethyl ether acetate solvent and 20 parts by weight of a Solvesso #150 solvent were mixed together, and the resultant mixture was then milled by a rotary mixer into an ink 1.

### Preparation of Pictured Sheet

Using ink 1, a filled-in form of print pattern was formed by screen printing on a polycarbonate resin film of 150 mm x 70 mm in size and 500 µm in thickness. The printed film was dried at 100°C for 2 hours to prepare a decorated sheet.

### Injection Molding

The resultant decorated sheet was placed in a mold for injection molding. Then, a polymer alloy (Yupiron PM1210N made by Mitsubishi Gas Chemical Company, Inc.) comprising a polycarbonate/acrylonitrile·butadiene·styrene copolymer was fed from an injection molding machine with a cylinder temperature set at 250°C into the mold at 116 cm³/sec. to prepare an injection molded sample of 1.5 mm in thickness.

### Measurement of Picture Rolling Amount

In an injection molded sample' 1 shown in the plan view of Fig. 1, the maximum displacement distance 5 of an image-formed area from an end 4 of an area 3 printed by ink 1 on the decorated sheet 2 was measured. In Table 1, this is referred to as the picture rolling amount.

### Measurement of Peel Strength

The decorated sheet side of the injection molded sample was provided with an incision of 1 cm in width, at which the decorated sheet was peeled from the injection molded resin at a rate of pulling of 300 mm/min. to measure a 180° peel strength using a tensile tester.

### Example 1B

The picture rolling amount was measured as in Example 1A with the exception that a polycarbonate resin (Yupiron s-3000 made by Mitsubishi Gas Chemical Company, Inc.) for injection molding was fed at 116 cm³/sec. with a cylinder temperature of 305°C to prepare an injection molded sample of 1.9 mm in thickness. The thus measured decoration flowing amount and peel strength are shown in Table 2.

### Example 2A

### Preparation of Ink 2

An ink 2 was prepared as in Example 1A with the exception that a paste of synthetic resin-coated aluminum particles (FZ-Q65 made by Toyo Aluminum Co., Ltd. with a particle diameter D₅₀ of 20 µm) was used as the aluminum particles.

Injection molding was carried out as in Example 1A to prepare an injection molded sample, and the decoration flowing amount and peel strength were thereafter measured with the results shown in Table 1.

### Example 2B

Injection molding was carried out following Example 1B with the exception that ink 2 was used to prepare an injection molded sample. Then, the decoration flowing amount and peel strength were measured with the results shown in Table 2.

### Example 3A

### Preparation of Ink 3

An ink 3 was prepared as in Example 1A with the exception that a paste of aluminum particles surface-treated with a coupling agent (97-2515 made by Toyo Aluminum Co., Ltd. with a particle diameter D₅₀ of 9 µm) was used as the aluminum particles.

Injection molding was carried out as in Example 1A to prepare an injection molded sample, and the decoration flowing amount and peel strength were thereafter measured with the results shown in Table 1.

### Example 3B

Injection molding was carried out following Example 1B with the exception that ink 3 was used to prepare an injection molded sample. Then, the decoration flowing amount and peel strength were measured with the results shown in Table 2.

### Comparative Example 1A

### Preparation of Ink 4

An ink 4 was prepared as in Example 1A with the exception that aluminum particles subjected to no surface treatment (TD280T made by Toyo Aluminum Co., Ltd. with a particle diameter D₅₀ of 20 µm) was used as the aluminum particles.

Injection molding was carried out as in Example 1A to prepare an injection molded sample, and the decoration flowing amount and peel strength were thereafter measured with the results shown in Table 1.

### Comparative Example 1B

Injection molding was carried out following Example 1B with the exception that ink 4 was used to prepare an injection molded sample. Then, the decoration flowing amount and peel strength were measured with the results shown in Table 2.

**Table 1**

| | Ex. 1A | Ex. 2A | Ex. 3A | Comp. 1A |
|---|---|---|---|---|
| Decoration Flowing Amount (mm) | 1.07 | 1.02 | 1.10 | 4.22 |
| Peel Strenqth (kN/m) | 2.30 | 2.82 | 2.51 | 1.75 |

**Table 2**

| | Ex. 1B | Ex. 2B | Ex. 3B | Comp. 1B |
|---|---|---|---|---|
| Decoration Flowing Amount (mm) | 1.54 | 1.65 | 1.47 | 7.5 |
| Peel Strength (kN/m) | 2.98 | 2.96. | 2.94 | 1.44 |

Molded articles obtained while the decorated film or sheet prepared using the ink of the present invention was placed in a mold for injection molding can be reduced in terms of the decoration flowing amount due to a flow of the synthetic resin during injection. Thus, the present invention enables molded article products to be produced in improved yields.

## Claims

1. An ink used for printing of a preprinted film or sheet used for decorating a molded article by integration with a synthetic resin melt at a synthetic resin molding step, comprising:
a binder comprising a polycarbonate resin, and
a metal particle coated on the surface thereof with a coupling agent or a synthetic resin.

2. The ink according to claim 1, wherein the metal particle is a flat form of aluminum particle.

3. The ink according to claim 1, wherein the metal particle is a flat form of aluminum particle coated on its surface with an acrylic resin.

4. A printed film or sheet used for decorating a molded article by integration with a synthetic resin melt at a synthetic resin molding step, which has been obtained by printing a synthetic resin film with an ink comprising a binder comprising a polycarbonate resin and a metal particle coated on the surface thereof with a coupling agent or a synthetic resin.

5. A synthetic resin injection molding method wherein a printed film or sheet is prepared by printing using an ink containing a metal particle coated on the surface thereof with a coupling agent or a synthetic resin, the printed film or sheet is then placed in a metal mold, and a synthetic resin melt is finally subjected to injection molding at a temperature of 200°C or higher.

## Patentansprüche

1. Tinte zum Bedrucken eines vorgedruckten Film- oder-Bahnenmaterials, das zum Verzieren eines Formteils durch Integrieren mit einer Kunstharzschmelze während eines Kunstharzgießschritts verwendet wird, wobei die Tinte aufweist:
ein Bindemittel, das ein Polycarbonatharz enthält; und
Metallpartikel, auf deren Oberfläche eine Haftmittel- oder eine Kunstharzschicht aufgebracht ist.

2. Tinte nach Anspruch 1, wobei die Metallpartikel flache Aluminiumpartikel sind.

3. Tinte nach Anspruch 1, wobei die Metallpartikel flache Aluminiumpartikel sind, auf deren Oberfläche eine Acrylharzschicht aufgebracht ist.

4. Bedrucktes Film- oder Bahnenmaterial zum Verzieren eines Formteils durch Integrieren mit einer Kunstharzschmelze während eines Kunstharzgießschritts, wobei das Film- oder Bahnenmaterial durch Bedrucken eines Kunstharzfilms mit einer Tinte erhalten wurde, die ein Bindemittel aufweist, das ein Polycarbonatharz und Metallpartikel enthält, auf deren Oberfläche eine Haftmittel- oder eine Kunstharzschicht aufgebracht ist.

5. Kunstharzspritzgießverfahren, wobei ein bedrucktes Film- oder Bahnenmaterial durch Bedrucken unter Verwendung einer Tinte hergestellt wird, die Metallpartikel enthält, auf deren Oberfläche eine Haftmittel- oder eine Kunstharzschicht aufgebracht ist, wobei das bedruckte Film- oder Bahnenmaterial anschließend in einer Metallform angeordnet wird und schließlich eine Kunstharzschmelze bei einer Temperatur von 200°C oder mehr einem Spritzgießvorgang unterzogen wird.

## Revendications

1. Encre utilisée pour imprimer un film ou une feuille préimprimée utilisé pour décorer un article moulé par intégration avec un produit de fusion d'une résine synthétique lors d'une étape de moulage de la résine synthétique, comprenant :
un liant comprenant une résine de polycarbonate, et
une particule métallique enduite sur sa surface avec un agent de couplage ou une résine synthétique.

2. Encre selon la revendication 1, dans laquelle la particule métallique est une forme plate de particule d'aluminium.

3. Encre selon la revendication 1, dans laquelle la particule métallique est une forme plate de particule d'aluminium enduite sur sa surface avec une résine acrylique.

4. Film ou feuille imprimé utilisé pour décorer un article moulé par intégration avec un produit de fusion de résine synthétique lors d'une étape de moulage de la résine synthétique, qui a été obtenu en imprimant un film de résine synthétique, avec une encre comprenant un liant comprenant une résine de polycarbonate et une particule métallique enduite sur sa surface avec un agent de couplage ou une résine synthétique.

5. Procédé de moulage par injection de résine synthétique dans lequel un film ou une feuille imprimé est préparé par impression en utilisant une encre contenant une particule métallique enduite sur sa surface avec un agent de couplage ou une résine synthétique, le film ou la feuille imprimé est ensuite placé dans un moule en métal, et un produit de fusion de résine synthétique est finalement soumis à un moulage par injection à une température de 200 °C ou plus.
